Europäisches Patentamt

European Patent Office

Office européen des brevets

(19)

(11) Numéro de publication : **0 284 470 B1**

(12)

# FASCICULE DE BREVET EUROPEEN

(45) Date de publication du fascicule du brevet :
02.01.92 Bulletin 92/01

(51) Int. Cl.⁵ : **A01B 15/14**

(21) Numéro de dépôt : **88400501.8**

(22) Date de dépôt : **03.03.88**

(54) **Dispositif pour régler la position de la poutre de support des corps de labourage d'une charrue.**

(30) Priorité : **06.03.87 FR 8703029**

(43) Date de publication de la demande :
**28.09.88 Bulletin 88/39**

(45) Mention de la délivrance du brevet :
**02.01.92 Bulletin 92/01**

(84) Etats contractants désignés :
**BE DE FR GB**

(56) Documents cités :
**AT-B- 381 829**
**DE-A- 3 320 202**
**DE-C- 3 345 231**
**FR-A- 2 551 305**
**GB-A- 2 166 932**

(73) Titulaire : **SOCIETE DES CHARRUES BONNEL**
**Route Départementale 840**
**F-27110 Le Neubourg (FR)**

(72) Inventeur : **Bonnel, Daniel**
**Le Troncq**
**F-27110 Le Neubourg (FR)**

(74) Mandataire : **Rinuy, Santarelli**
**14, avenue de la Grande Armée**
**F-75017 Paris (FR)**

Jouve, 18, rue Saint-Denis, 75001 PARIS

**Description**

La présente invention se rapporte à un dispositif pour régler la position de la poutre de support des corps de labourage d'une charrue, et concerne plus particulièrement les dispositifs comportant un bras articulé à une première extrémité sur un dispositif d'attelage que comporte la charrue et à une deuxième extrémité sur la poutre de support des corps de labourage.

On sait que la position de cette poutre doit être réglée en fonction de l'écartement régnant entre les roues arrière du tracteur et de l'écartement régnant entre deux corps de labourage successif de la charrue, ce dernier écartement étant généralement appelé "largeur de raie".

L'une des conditions de réglage de la poutre porte sur l'écartement entre le flanc intérieur d'une roue arrière du tracteur et le corps de labourage le plus en avant de la charrue, écartement généralement dit "largeur de première raie", cette dernière devant être rendue égale à la largeur de raie de la charrue.

Une autre condition de réglage est relative au "dévers de pointe", c'est-à-dire à l'orientation des corps de labourage par rapport au plan vertical de symétrie du dispositif d'attelage, qui doit correspondre à une valeur prédéterminée.

On connaît déjà par le brevet Français 2.438.959 un dispositif de réglage de la position de la poutre de support des corps de labourage, qui comporte un premier bras articulé à une première extrémité sur un dispositif d'attelage que comporte la charrue et à une deuxième extrémité sur la poutre de support des corps de labourage ; un deuxième bras, réglable en longueur, articulé à une première extrémité sur le dispositif d'attelage et à une deuxième extrémité sur la poutre de support des corps de labourage ; et un bras diagonal de longueur réglable disposé en diagonale dans le quadrilatère formé par la poutre de support des corps de labourage, le premier bras, le dispositif d'attelage et le deuxième bras.

Lorsqu'on joue sur la longueur du deuxième bras, c'est-à-dire sur la longueur d'un des côtés du quadrilatère, on fait varier l'orientation de la poutre de support des corps de labourage par rapport au plan vertical de symétrie du dispositif d'attelage tandis que lorsqu'on modifie la longueur du bras diagonal on fait varier à la fois la position en largeur et l'orientation du dispositif d'attelage que comporte la charrue par rapport à la poutre de support des corps de labourage, si l'on suppose que celle-ci est fixe et que le dispositif d'attelage est mobile quand on règle le bras diagonal.

Dans la suite de la présente demande le dispositif d'attelage que comporte la charrue sera considéré comme étant fixe par rapport au tracteur (leurs plans verticaux de symétrie étant confondus) et la poutre de support des corps de charrue comme étant mobile quand on agit sur le dispositif de réglage, ce qui correspond à ce que l'on observe en pratique. Selon cette considération, c'est bien entendu la position en largeur et l'orientation de la poutre de support des corps de labourage par rapport au plan vertical longitudinal de symétrie du tracteur qui varie quand on règle le bras diagonal.

On observera que toute variation de longueur du deuxième bras ou du bras diagonal entraîne une variation de l'orientation de la poutre de support des corps de labourage et donc une variation de la valeur du dévers de pointe. Si l'on agit sur un bras pour régler la largeur de première raie il est nécessaire d'agir sur l'autre bras pour ramener le dévers à la valeur voulue.

On connaît également par GB-A-2166932 un dispositif de réglage de la position de la poutre de support des corps de labourage, qui comporte un premier bras articulé à une première extrémité sur un dispositif d'attelage que comporte la charrue et à une deuxième extrémité sur la poutre de support des corps de labourage, deux autres bras qui forment un parallélogramme avec le premier bras et le dispositif d'attelage, et dans l'un des modes de réalisation un bras à longueur réglable disposé en diagonale dans le parallélogramme tandis le bras du parallélogramme parallèle au premier bras se prolonge vers la poutre des corps de labourage avec son bout qui est articulé à une extrémité d'un autre bras à longueur réglable dont l'autre extrémité est articulée sur la poutre en un point distinct de son point d'articulation avec le premier bras.

La présente invention a pour but de fournir un dispositif de réglage où il suffit d'un seul bras à longueur réglable pour ajuster la largeur de première raie.

Le dispositif de réglage selon l'invention comporte un premier bras articulé à une première extrémité sur un dispositif d'attelage que comporte la charrue et à une deuxième extrémité sur la poutre de support des corps de labourage, un deuxième et un troisième bras articulés entre eux à une première de leurs extrémités, ledit deuxième bras étant articulé à une deuxième extrémité sur ledit dispositif d'attelage en un point distinct du point d'articulation du premier bras, ledit troisième bras étant articulé à une deuxième extrémité sur la poutre de support des corps de labourage en un point distinct du point d'articulation dudit premier bras ; la poutre de support des corps de labourage, le premier bras, le dispositif d'attelage et lesdits deuxième et troisième bras formant ainsi un pentagone ; ce dispositif étant caractérisé en ce qu'il comporte en outre un seul bras, disposé entre deux éléments formant un segment dudit pentagone, ce bras étant à longueur réglable pour déformer le pentagone tandis qu'il y est disposé pour que l'articulation entre lesdits deuxième et troisième bras s'ouvre ou se ferme au cours de ses déformations de la quantité nécessaire pour que la poutre de support des corps de labourage se déplace en restant parallèle à elle-même.

Un seul bras à longueur réglable est ainsi suffisant pour ajuster la largeur de première raie, la distance entre les extrémités de l'ensemble formé par les deuxième et troisième bras s'adapte en permanence à la valeur convenable pour maintenir la poutre de support des corps de labourage parallèle à elle-même au cours de son déplacement, contrairement au deuxième bras du dispositif antérieur précité dont la distance entre les extrémités reste bien évidemment constante quand on manoeuvre le bras diagonal.

Par rapport à ce dispositif antérieur le dispositif selon l'invention est d' un emploi particulièrement simple, aussi simple sinon plus simple que l'utilisation d'un dispositif de réglage comportant une glissière pour déplacer latéralement la poutre de support des corps de labourage par rapport au dispositif d'attelage que comporte la charrue, mais sans que cette simplicité à l'emploi ait pour contrepartie un coût d'obtention élevé, le dispositif selon l'invention nécessitant beaucoup moins de matière, de main-d'oeuvre et d'outillage qu'un dispositif à glissière. L'invention offre la commodité d'emploi d'un dispositif à glissière avec un prix de revient comparable à celui du dispositif antérieur précité.

D'autres caractéristiques, particularités et avantages de l'invention apparaîtront avec celles et ceux précédemment exposés au cours de la description d'un mode particulier de réalisation de l'invention, donné ci-après à titre d'exemple non limitatif en référence aux dessins annexés. Sur ceux-ci :

— la figure 1 et une vue partielle simplifiée en plan d'une charrue comportant un dispositif de réglage selon l'invention, attelée derrière un tracteur ;

— la figure 2 est une représentation schématique du dispositif de réglage montré sur la figure 1 ;

— les figures 3A, 3B et 4A, 4B sont des vues partielles simplifiées en plan de la charrue représentée sur la figure 1, dans des positions où la poutre de support des corps de labourage est correctement réglée, l'écartement entre les roues arrières du tracteur représenté sur la figure 3B étant inférieur à celui du tracteur de la figure 3A, la largeur de raie de la charrue représentée sur la figure 4B étant supérieure à celle de la charrue de la figure 4A ;

— la figure 5 est une représentation schématique d'un dispositif de réglage structurellement similaire à celui montré sur les figures précédentes et à caractéristiques géométriques différentes, représenté en traits continus dans une première position extrême et en traits interrompus dans une deuxième extrême ;

— la figure 6 montre en traits continus le dispositif de réglage illustré sur la figure 5 dans ladite deuxième position extrême, et en traits interrompus un dispositif de réglage en quadrilatère qui aurait des caractéristiques géométriques correspondant à ladite première position de la figure 5, ce quadrilatère étant montré dans la position qu'il prendrait après un déplacement correspondant à celui effectué entre lesdites première et deuxième positions extrêmes de la figure 5 ;

— la figure 7 montre en traits continus le dispositif illustré sur la figure 5 dans ladite première position extrême et en traits interrompus la modification de la position de la poutre de support des corps de labourage consécutive à l'utilisation d'un troisième bras de longueur différente ;

— et la figure 8 est une vue comparable à la figure 5 pour un mécanisme comportant ce troisième bras de longueur différente.

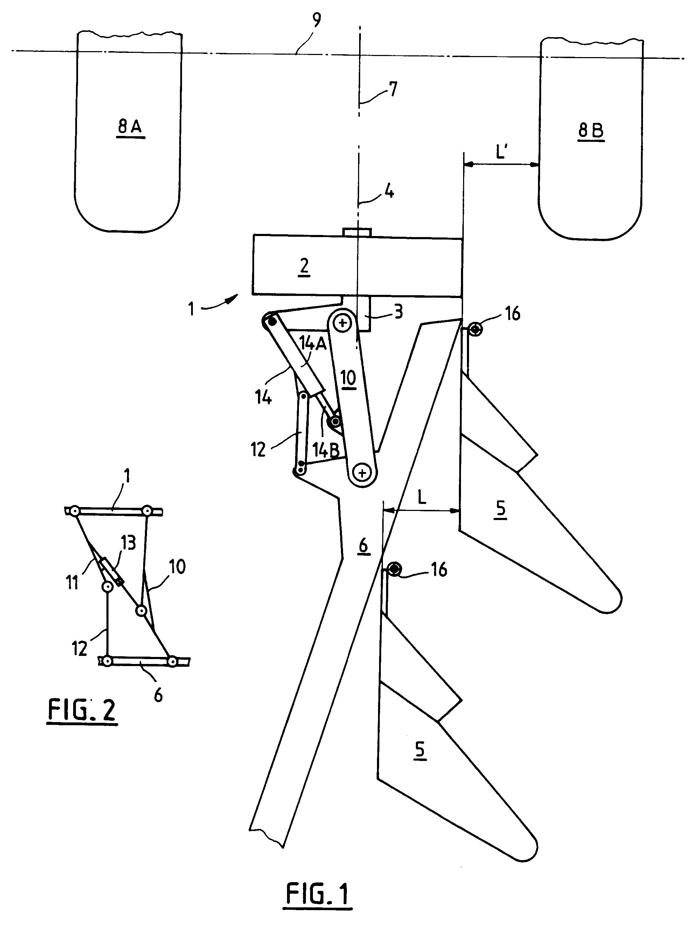

La charrue représentée de façon partielle et simplifiée sur la figure 1 comporte un dispositif d'attelage 1 comportant un T renversé 2 d'attelage en trois points à un tracteur. Sur le segment horizontal du T un pivot 3 est monté à rotation autour d'un axe situé dans un plan transversal de symétrie 4 du T renversé 2, ce pivot étant commandé par un dispositif prévu pour lui faire effectuer des demi-tours afin de retourner la charrue avant qu'on inverse le sens de déplacement du tracteur. Ce dispositif d'attelage de la charrue à T renversé et à pivot de retournement est classique, il n'est cité qu'à titre d'exemple, une charrue à dispositif d'attelage de type différent étant tout à fait susceptible d'être équipé d'un dispositif de réglage selon l'invention.

Les corps de labourage 5 sont montés sur une poutre de support 6 d'une manière qui sera expliquée par la suite. Deux corps 5 successifs sont espacés d'une largeur de raie L et orientés par rapport au plan 4 de la valeur prévue pour le dévers de pointe, l'orientation des corps de labourage correspondant à cette valeur étant ici un parallélisme entre le plan 4 et la face des corps 5 qui est en regard de la poutre 6. On observera que le dévers est correctement réglé pour la charrue représentée sur la figure 1. Si le dévers était mal réglé il aurait fallu faire varier l'inclinaison de la poutre 6 par rapport au plan 4 pour obtenir la valeur correcte.

Le tracteur derrière lequel la charrue est attelée présente un plan vertical de symétrie longitudinal 7, il comporte deux roues arrières 8A et 8B tournant autour d'un axe de rotation 9. Ainsi qu'indiqué précédemment on considère dans la présente demande que les plans 4 et 7 sont confondus.

La largeur de la première raie L', qui correspond à l'écartement entre le corps de labourage le plus en avant de la charrue et le flanc intérieur de la roue arrière du tracteur la plus proche de ce corps, ici 8B, est également représentée réglée à la valeur correcte sur la figure 1, l'écartement L est égal à l'écartement L'. Pour régler cette largeur de première raie, il a fallu déplacer la poutre 6, parallèlement à elle-même pour conserver le réglage du dévers si celui-ci était précédemment à la valeur correcte.

Conformément à l'invention, ainsi qu'on le voit plus particulièrement sur les figures 1 et 2, le dispositif de réglage de la position de la poutre 6 comporte un premier bras 10 articulé à une première extrémité sur le pivot 3 du dispositif d'attelage ou plus généralement sur le dispositif d'attelage 1, et articulé à une deuxième extrémité sur la poutre 6 ; un deuxième et un troisième bras, respectivement 11 et 12, articulés entre eux à une première de leurs extrémités, le deuxième bras 11 étant articulé à une deuxième extrémité sur le dispositif d'attelage 1 en un point distinct du point d'articulation du premier bras 10, le troisième bras 12 étant articulé à une deuxième extrémité sur la poutre 6 en un point distinct du point d'articulation du premier bras 10 ; la poutre 6, le premier bras 10, le dispositif d'attelage 1 et les deuxième et troisième bras 11 et 12 formant ainsi un pentagone ; et un bras à longueur réglable 13 disposé entre deux des éléments formant un segment dudit pentagone pour déformer celui-ci.

Dans le mode particulier de réalisation de l'invention illustré sur les dessins le bras 13 est disposé entre le premier bras 10 et le deuxième bras 11, il est articulé à une première extrémité sur le premier bras 10 et est encastré à une seconde extrémité sur le deuxième bras 11.

Selon des caractéristiques préférées de l'invention les deuxième bras 11 et bras à longueur réglable 13 forment un ensemble comportant un vérin 14 articulé à une première extrémité sur le premier bras 10 et à une deuxième extrémité sur le dispositif d'attelage 1, la première extrémité du troisième bras 12 étant articulée sur une partie de ce vérin solidaire de ladite deuxième extrémité du vérin.

Ces caractéristiques offrent l'avantage de permettre de fabriquer très simplement l'ensemble formé par les bras 11 et 13. Le vérin 14 illustré sur les figures est un vérin hydraulique comportant un cylindre 14A et une tige 14B, le cylindre 14A étant articulé sur le dispositif d'attelage 1 et la tige 14B sur le bras 10 tandis que la première extrémité du bras 12 est articulée sur le cylindre 14A.

Bien entendu tout type de vérin autre qu'hydraulique, par exemple à vis, est conforme à ces caractéristiques.

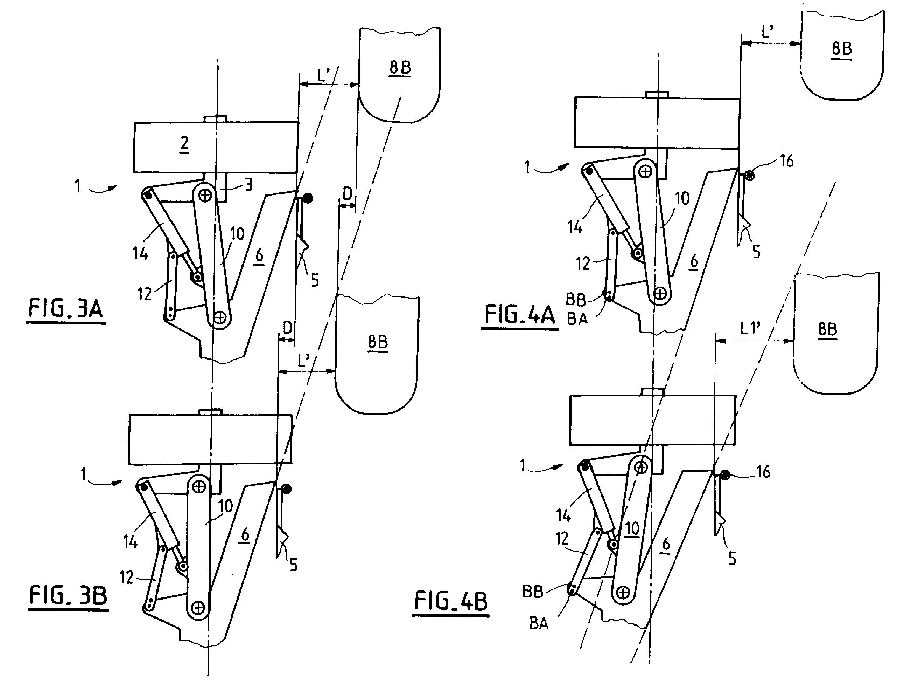

Les figures 3A, 3B et 5, 6 illustrent le fonctionnement du dispositif de réglage selon l'invention. La même charrue, avec la même valeur L de largeur de raie, est montrée correctement réglée sur les figures 3A et 3B, le tracteur de la figure 3B ayant un écartement entre ses roues inférieur à celui du tracteur de la figure 3A, la différence d'écartement étant égale à deux fois la distance D montrée sur les figures 3A, 3B. A titre d'exemple on pourra noter que la valeur de D peut atteindre 10 cm.

Pour obtenir le réglage de la largeur de première raie (L' = L), il faut déplacer la poutre 6 parallèlement à elle-même de la distance D, vers la gauche si on veut utiliser sur le tracteur de la figure 3B la charrue qui était précédemment réglée pour celui de la figure 3A.

Pour réaliser ce déplacement, il suffit de raccourcir la longueur du vérin 14, la poutre 6 restant parallèle à elle-même au cours de la déformation correspondante du pentagone de réglage.

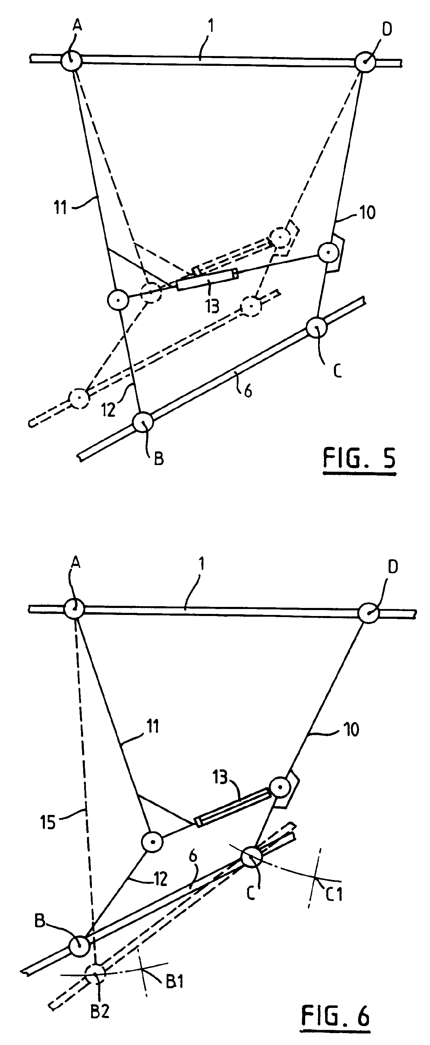

La figure 5 montre, pour des données géométriques différentes, un dispositif de réglage structurellement similaire à celui représenté sur les figures 1 à 3B, les positions dessinées respectivement en traits continus et en traits interrompus étant comparables aux positions montrées sur les figures 3A et 3B.

Au cours du déplacement entre ces deux positions, l'articulation entre les bras 11 et 12 s'ouvre ou se ferme de la quantité nécessaire pour que la poutre 6 se déplace en restant parallèle à elle-même. On notera que dans le mode de réalisation illustré sur les dessins il est nécessaire que l'angle formé entre les bras 11 et 12, mesuré à l'intérieur du pentagone 1, 11, 12, 6 et 10, reste rentrant lorsque ce dernier se déforme, sinon la structure illustrée ne se déformerait pas conformément à l'invention.

A titre de comparaison on a représenté sur la figure 6 en traits continus la position comparable à celle de la figure 3B et en traits interrompus un bras 15 ayant pour longueur la distance séparant l'articulation A du bras 11 sur l'attelage 1 de l'articulation B du bras 12 sur la poutre 6, dans la configuration du dispositif de réglage comparable à celle de la figure 3A (figure 5, traits continus). Les points B1 et C1 (figure 6) corrrespondent aux emplacements des articulations B et C de la poutre 6 avec respectivement les bras 12 et 10, dans cette dernière configuration.

Lors du déplacement entre les deux configurations, l'articulation C a suivi un arc de cercle centré sur l'articulation D du bras 10 sur l'attelage 1, étant donné que le bras 10 est rigide. Si l'on avait le bras rigide 15 à la place des deuxième et troisième bras 11 et 12, l'articulation B suivrait un arc de cercle centré sur l'articulation A et viendrait en B2 pour un même déplacement du bras 10 ; et la poutre 6 ne se serait pas déplacée parallèlement à elle-même.

Dans la charrue représentée (voir figure 1), le mode de montage des corps de labourage 5 sur la poutre 6 permet de faire varier la largeur de raie L : les corps 5 sont reliés chacun à la poutre 6 par, d'une part un pivot 16 à une première extrémité (la solidarisation du pivot sur la poutre n'est pas représentée) et d'autre part, vers l'autre extrémité par un bras à longueur réglable (non représenté). Pour changer la largeur de raie, il faut régler la longueur de chacun de ces bras à la même valeur, ce qui fait pivoter tous les corps 5 du même angle. On a alors une nouvelle valeur de largeur de raie, mais la charrue n'est pas encore totalement réglée car la rotation des corps de labourage par rapport à la poutre 6 a entraîné un déréglage du dévers de pointe. Pour régler celui-ci il faut faire pivoter la poutre 6 pour ramener les flancs des corps 5 en regard de la poutre 6 parallèles au plan 4.

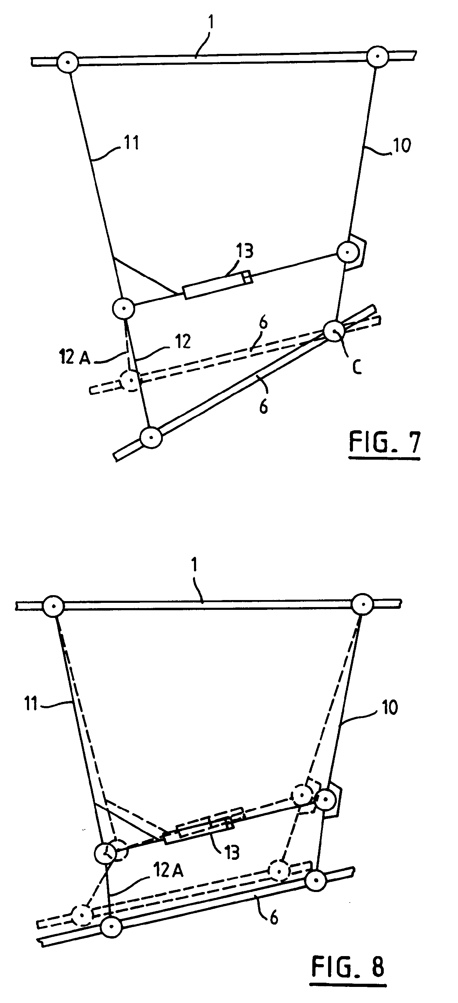

Selon une caractéristique préférée de l'invention, le troisième bras 12 est également réglable en longueur. Ce réglage permet de faire varier l'orientation de la poutre 6, comme on le voit sur la figure 7 où l'on montre que si on remplace le bras 12 par un bras 12A de longueur différente on fait pivoter la poutre 6 autour de l'articulation C.

Les moyens de réglage en longueur du bras 12 sont de tout type connu, notamment un vérin manuel à vis ou plus simplement une série d'alésages tels que les alésages BA et BB (voir figures 4A et 4B) qui permettent de changer la longueur utile du bras en changeant d'alésage d'articulation.

La même charrue est restée montrée sur le même tracteur entre les figures 4A et 4B, mais sur cette dernière figure on a changé la largeur de raie, qui est passée d'une largeur L (par exemple 12 pouces) à une largeur L1 (par exemple 16 pouces). Pour effectuer le réglage de la charrue lorsqu'on a changé cette largeur de raie, il a fallu d'une part, après rotation des corps 5 autour des pivots 16, changer la longueur du bras 12 pour retrouver la valeur voulue du dévers de pointe (manoeuvre comparable à celle illustrée sur la figure 7), puis régler la largeur de première raie L1' (pour la rendre égale à L1), en faisant varier la longueur du vérin 14, c'est-à-dire en déformant à nouveau le pentagone d'une façon comparable à la déformation illustrée sur la figure 8 entre la configuration représentée en traits continus et celle représentée en traits interrompus. Bien entendu la poutre 6 s'est déplacée parallèlement à elle-même, malgré ce changement de longueur du bras 12.

A propos de la longueur du bras 12, il est rappelé qu'il est nécessaire que l'angle formé entre les bras 11 et 12, mesuré à l'intérieur du pentagone 6, 10, 1, 11 et 12, reste rentrant pour que la structure illustrée fonctionne selon l'invention.

Il va de soi que celle-ci ne se limite nullement au mode de réalisation décrit et représenté, mais qu'elle englobe toutes les variantes que l'homme de métier pourra déterminer, notamment dans la disposition du bras à longueur réglable 13.

## Revendications

1. Dispositif pour régler la position de la poutre (6) de support des corps de labourage d'une charrue, comportant un premier bras (10) articulé à une première extrémité sur un dispositif d'attelage (1) que comporte la charrue et à une deuxième extrémité sur la poutre (6) de support des corps de labourage, un deuxième et un troisième bras (11, 12) articulés entre eux à une première de leurs extrémités, ledit deuxième bras (11) étant articulé à une deuxième extrémité sur ledit dispositif d'attelage (1) en un point distinct du point d'articulation du premier bras (10), ledit troisième bras (12) étant articulé à une deuxième extrémité sur la poutre (6) de support des corps de labourage en un point distinct du point d'articulation dudit premier bras (10) ; la poutre de support des corps de labourage (6), le premier bras, le dispositif d'attelage et lesdits deuxième et troisième bras (11, 12) formant ainsi un pentagone ; ce dispositif étant caractérisé en ce qu'il comporte en outre un seul bras (13), disposé entre deux éléments (6, 10, 1, 11, 12) formant un segment dudit pentagone, ce bras étant à longueur réglable pour déformer le pentagone tandis qu'il y est disposé pour que l'articulation entre lesdits deuxième et troisième bras s'ouvre ou se ferme au cours de ses déformations de la quantité nécessaire pour que la poutre (6) de support des corps de labourage se déplace en restant parallèle à elle-même.

2. Dispositif selon la revendication 1, caractérisé en ce que ledit bras (13) à longueur réglable pour déformer le pentagone est articulé à une première extrémité sur ledit premier bras (10) et encastré à une seconde extrémité sur ledit deuxième bras (11).

3. Dispositif selon l'une quelconque des revendications 1 ou 2, caractérisé en ce que lesdits deuxième bras (11) et bras à longueur réglable (13) pour déformer le pentagone forment un ensemble comportant un vérin (14) articulé à une première extrémité sur ledit premier bras (10) et à une deuxième extrémité sur le dispositif d'attelage (1) que comporte la charrue, la première extrémité dudit troisième bras (12) étant articulée sur une partie de ce vérin solidaire de ladite seconde extrémité du vérin.

4. Dispositif selon l'une quelconque des revendications 1 à 3, caractérisé en ce que ledit troisième bras (12) est réglable en longueur.

## Claims

1. A device for controlling the position of the beam (6) for supporting tilling elements of a plough, comprising a first arm (10) articulated at a first end to a hitching device (1) which the plough comprises and at a second end to the beam (6) for supporting tilling elements, a second and a third arm (11, 12) pivotably linked together at a first of their ends, the said second arm (11) being articulated at a second end on the said hitching device (1) at a point distinct from the articulation point of the first arm (10), the said third arm (12) being articulated at a second end on the beam (6) for supporting tilling elements at a point distinct from the articulation point of the said first arm (10) ; the beam for supporting tilling elements (6), the first arm, the hitching device and the said second and third arms (11, 12) thus forming a pentagon ; the device being characterized in that it also comprises a single arm (13) disposed between two components (6, 10, 1, 11, 12) forming a segment of the said pentagon, this arm being adjustable in length in order to deform the pentagon, and it is disposed so that the articulation between the said second and third arms opens or closes during these deformations to the extent necessary for the beam (6) for supporting tilling elements to be displaced whilst remaining parallel to itself.

2. A device according to Claim 1, characterized in that the said arm of adjustable length (13) for deforming the pentagon is articulated at a first end on the said first arm (10) and rigidly attached at a second end to the said second arm (11).

3. A device according to either one of Claims 1 or 2, characterized in that the said second arm (11) and the said arm of adjustable length (13) for deforming the pentagon together form an assembly comprising a jack (14) articulated at a first end on the said first arm (10) and at a second end on the hitching device (1) which the plough comprises, the first end of the said third arm (12) being articulated on a part of the jack which is integral with the said second end of the jack.

4. A device according to any one of Claims 1 to 3, characterized in that the said third arm (12) is adjustable in length.

**Patentansprüche**

1. Vorrichtung zum Einstellen der Lage des Stützträgers (6) der Pflugkörper eines Pfluges mit einem ersten Arm (10), der mit seinem ersten Ende gelenkig an einer Zugeinrichtung (1), mit welcher der Pflug versehen ist, und mit seinem zweiten Ende am Stützträger (6) der Pflugkörper befestigt ist, mit einem zweiten und einem dritten Arm (11, 12), die mit einem ersten ihrer Enden gelenkig miteinander verbunden sind, wobei der zweite Arm (11) mit seinem zweiten Ende an der Zugeinrichtung (1) und der dritte Arm (12) mit seinem zweiten Ende am Stützträger (6) der Pflugkörper jeweils in einem vom Anlenkpunkt des ersten Armes (10) getrennten Punkt angelenkt sind, und wobei der Stützträger (6) der Pflugkörper, der erste Arm, die Zugeinrichtung sowie der zweite und dritte Arm (11, 12) somit ein Fünfeck bilden, **dadurch gekennzeichnet**, daß die Vorrichtung darüberhinaus einen einzigen, zwischen zwei Elementen (6, 10, 1, 11, 12), die ein Segment dieses Fünfecks bilden, angeordneten Arm (13) aufweist, der zur Änderung der Form des Fünfecks mit verstellbarer Länge ausgebildet und dort vorgesehen ist, damit die Gelenkverbindung zwischen dem zweiten und dritten Arm sich bei diesen Formänderungen in dem erforderlichen Maße öffnet oder schließt, um den Stützträger (6) der Pflugkörper bei einer Versetzbewegung parallel zu sich selbst zu halten.

2. Vorrichtung nach Anspruch 1, dadurch gekennzeichnet, daß der Arm (13) mit verstellbarer Länge zum Verformen des Fünfecks mit seinem ersten Ende am ersten Arm (10) befestigt und mit seinem zweiten Ende am zweiten Arm (11) eingespannt ist.

3. Vorrichtung noch einem der Ansprüche 1 oder 2, dadurch gekennzeichnet, daß der zweite Arm (11) und der Arm (13) mit verstellbarer Länge zum Verformen des Fünfecks eine Baugruppe bilden, die einen Zylinder (14) aufweist, der mit seinem ersten Ende gelenkig am ersten Arm (10) und mit seinem zweiten Ende an der Zugeinrichtung (1), mit welcher der Pflug versehen ist, befestigt ist, wobei das erste Ende des dritten Armes (12) an einem am zweiten Ende des Zylinders fest angebrachten Abschnitt desselben angelenkt ist.

4. Vorrichtung nach einem der Ansprüche 1 bis 3, dadurch gekennzeichnet, daß der dritte Arm (13) in seiner Länge verstellbar ist.

FIG. 2

FIG. 1

FIG.4A

FIG.4B

FIG.3A

FIG.3B

FIG. 5

FIG. 6

1

11                    10

13

12 A        12         6

6

C

**FIG. 7**

1

11                    10

13

12 A

6

**FIG. 8**

10